# EUROPEAN PATENT SPECIFICATION

(11) **EP 3 915 751 B1**
(45) Date of publication and mention of the grant of the patent: **06.11.2024**
(21) Application number: 21175936.0
(22) Date of filing: 26.05.2021
(51) Int. Cl.: B29C 39/10, B29C 39/26, B29C 33/30, B29C 45/14, B29C 45/27, H02K 15/02, H02K 15/03, H02K 1/27, H02K 15/12, B29C 45/02

(54) **ROTOR MANUFACTURING APPARATUS**
ROTORHERSTELLUNGSVORRICHTUNG
APPAREIL DE FABRICATION DE ROTOR

(30) Priority: 28.05.2020 JP 2020093696
(43) Date of publication of application: 01.12.2021
(73) Proprietor: Nidec Corporation, Kyoto-shi, Kyoto 601-8205 (JP)
(72) Inventor: TAKENAKA, Akira, Kyoto 601-8205 (JP); IWATA, Koichi, Kyoto 601-8205 (JP); TSUJI, Hideki, Kyoto 601-8205 (JP); TANAKA, Yosuke, Kyoto 601-8205 (JP)
(74) Representative: Viering, Jentschura & Partner mbB Patent- und Rechtsanwälte

(56) References cited:
- EP-A1- 1 793 479
- JP-A- 2017 085 872
- JP-A1- WO2015 053 368
- JP-B2- 5 998 733
- US-A1- 2016 352 198
- US-A1- 2018 117 806

## Description

### Technical Field

The present invention relates to a rotor manufacturing apparatus.

### Background Art

There has been known an apparatus for manufacturing a rotor including a laminated body having a magnet insertion hole, and a permanent magnet fixed in the magnet insertion hole with a resin. For example, Patent Literature 1 discloses, as an apparatus for manufacturing a laminated iron core, a resin filling apparatus including a pair of sandwiching members and a filling machine.

In the resin filling apparatus disclosed in Patent Literature 1, the sandwiching members are quadrangular flat plates arranged above and below. The upper one of the sandwiching members includes a plurality of resin flow paths penetrating therethrough in a thickness direction. The filling machine includes a plurality of plungers and a drive mechanism. The plungers are respectively located in the resin flow paths, and are movable in the resin flow paths. The drive mechanism is, for example, an air cylinder that moves each of the plungers in the thickness direction of the sandwiching members, based on a command from a controller.

In filling magnet insertion holes in a laminated body with a resin, using the resin filling apparatus disclosed in Patent Literature 1, first, the laminated body is pressurized in such a manner that the laminated body is sandwiched between the sandwiching members. In this pressurized state, the magnet insertion holes are filled with the resin. Specifically, a resin pellet is charged into the resin flow paths, and then the plungers are respectively inserted into the resin flow paths. Thereafter, the controller drives a heater and the drive mechanism to melt the resin pellet, and the plungers supply the molten resin into the magnet insertion holes through the resin flow paths. The resin in each magnet insertion hole is solidified, so that permanent magnets are fixed in the magnet insertion holes with the resin.

### Citation List

### Patent Literature

Patent Literature 1: JP 2018-82539 A Patent Literature 2: WO20 1505 3368 A1 discloses a rotor manufacturing apparatus with improved clamping.

### Summary of Invention

### Technical Problem

According to the resin filling apparatus disclosed in Patent Literature 1, the laminated body is positioned with respect to the pair of sandwiching members in such a manner that the laminated body is sandwiched between the sandwiching members. The laminated body is sandwiched between the sandwiching members at a position where the laminated body is mounted on the lower one of the sandwiching members. In other words, the position where the laminated body is sandwiched between the sandwiching members differs depending on the position where the laminated body is mounted on the lower sandwiching member. In this case, the magnet insertion holes in the laminated body are possibly misaligned with outlets of resin flow paths in a mold. As a result, the resin is not supplied into the magnet insertion holes in some cases.

An object of the present invention is to provide a rotor manufacturing apparatus for manufacturing a rotor having an accommodation hole for accommodating a magnet, the rotor manufacturing apparatus being capable of easily positioning a rotor main body in supplying a resin into the accommodation hole.

### Solution to Problem

An embodiment of the present invention provides a rotor manufacturing apparatus for manufacturing a rotor including a rotor main body having a hole located at its center and an accommodation hole accommodating a magnet, and the magnet accommodated in the accommodation hole and fixed in the accommodation hole with a resin. The rotor manufacturing apparatus includes: a first mold including a resin receive space portion receiving the resin to be supplied into the accommodation hole, a flow path through which the molten resin flows into the accommodation hole, and a contact portion inserted in the hole, the contact portion being in contact with an inner peripheral face of the hole; and a second mold configured to sandwich the rotor main body in conjunction with the first mold.

### Advantageous Effects of Invention

According to an embodiment of the present invention, a rotor manufacturing apparatus for manufacturing a rotor having an accommodation hole for accommodating a magnet is capable of easily positioning a rotor main body in supplying a resin into the accommodation hole.

### Brief Description of Drawings

FIG. 1 is a sectional view of a schematic configuration of a rotor manufacturing apparatus according to an embodiment.
FIG. 2 is a partially enlarged sectional view of FIG. 1.
FIG. 3 is a bottom view of a part of a first mold and a rotor main body.
FIG. 4 is a perspective view of a part of the first mold and the rotor main body.
FIG. 5 is a plan view of a plate and the rotor main body.
FIG. 6 is a perspective view of the plate and the rotor main body.

### Description of Embodiments

An embodiment of the present invention will be described in detail below with reference to the drawings. In the respective drawings, identical or corresponding portions are denoted with identical reference signs; therefore, the description thereof will not be given repeatedly. In addition, the respective drawings do not faithfully illustrate the dimensions of actual constituent members, dimensional ratios of the constituent members, and the like.

In the following description on a rotor manufacturing apparatus 1, the term "axis direction", "axial", or "axially" refers to a direction parallel with an axis of a rotor main body 21, the term "radial direction", "radial", or "radially" refers to a direction orthogonal to the axis, and the term "circumferential direction", "circumferential", or "circumferentially" refers to a direction along an arc about the axis. Also in the following description, the term "up and down direction" refers to a vertical direction in a state in which the rotor manufacturing apparatus 1 is installed. It should be noted, however, that the directional definitions do not intend to limit the orientation of the rotor manufacturing apparatus 1 in putting the rotor manufacturing apparatus 1 to use.

Also in the following description, the verbal definitions "fix", "connect", "join", "mount", and others involve not only a case where two members are, for example, directly fixed to each other, but also a case where two members are, for example, fixed to each other with another member interposed therebetween. In the following description, the verbal definitions such as "fix" involve a state of, for example, direct fixation between two members and a state of, for example, indirect fixation between two members.

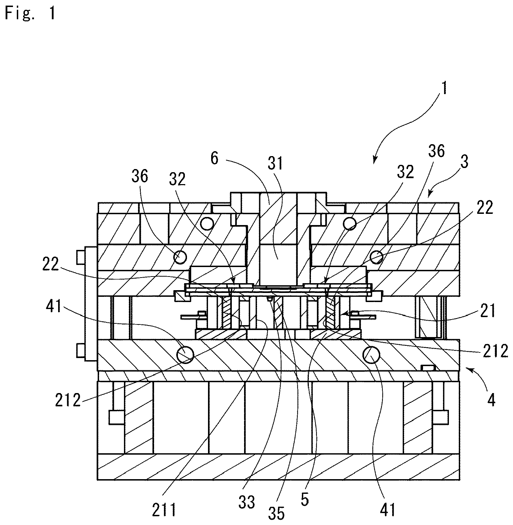

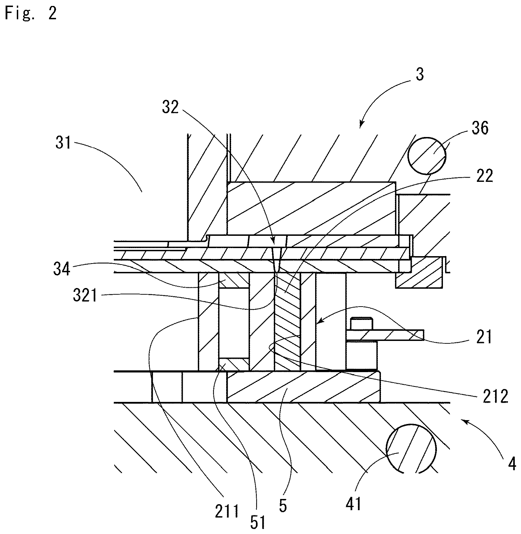

FIG. 1 is a sectional view of a schematic configuration of a rotor manufacturing apparatus 1 according to an embodiment of the present invention. FIG. 2 is a partially enlarged sectional view of FIG. 1. The rotor manufacturing apparatus 1 is an apparatus for manufacturing a rotor including a rotor main body 21 and a magnet 22. The rotor manufacturing apparatus 1 includes a first mold 3, a second mold 4, and a plate 5. In the present embodiment, the first mold 3 is located above the second mold 4, and the second mold 4 is located below the first mold 3.

A first mold drive mechanism (not illustrated) moves the first mold 3 upward and downward relative to the second mold 4. The rotor main body 21 is sandwiched between the first mold 3 and the second mold 4. At this time, the rotor main body 21 is mounted on the plate 5 located on the second mold 4.

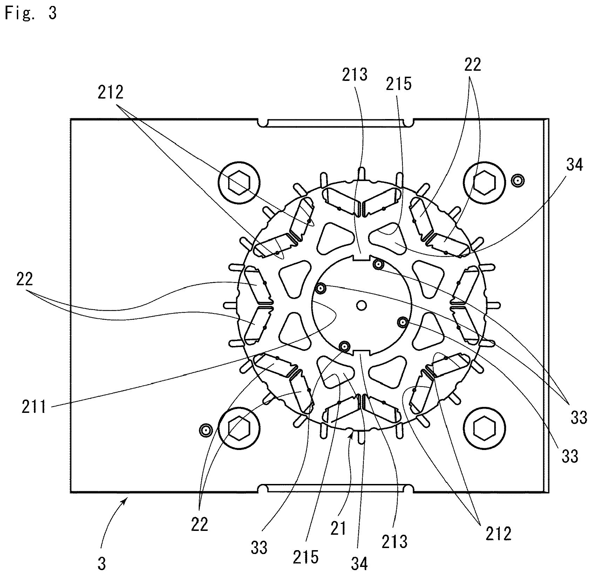

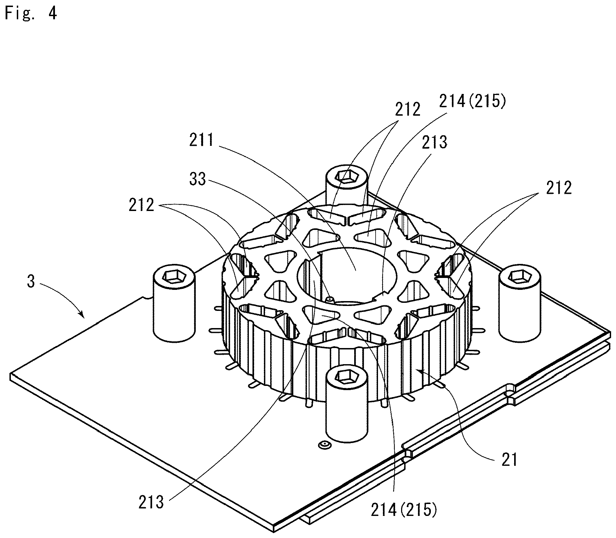

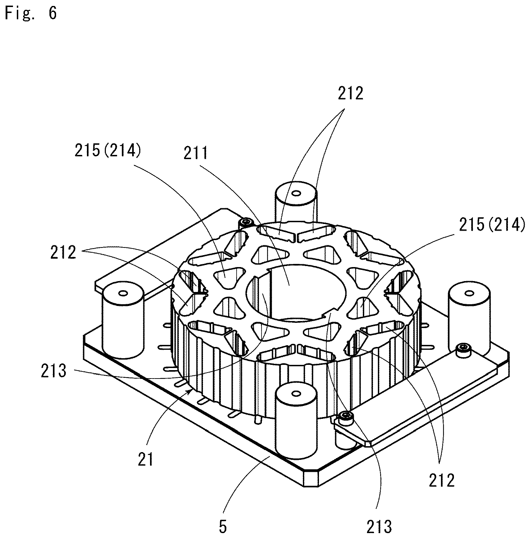

As illustrated in FIGS. 3 to 6, the rotor main body 21 has a hole 211 located at its center, and an accommodation hole 212 accommodating the magnet 22. It should be noted that FIGS. 4 and 6 do not illustrate the magnet 22.

In the present embodiment, the hole 211 in the rotor main body 21 is a through-hole including the axis of the rotor main body 21. In other words, the rotor main body 21 has a cylindrical shape and extends axially. The rotor main body 21 includes a projection 213 protruding radially inward from an inner peripheral face of the hole 211. The projection 213 extends along the axial direction of the hole 211, on the inner peripheral face of the hole 211.

In the present embodiment, the rotor main body 21 includes two projections 213. The projections 213 are located opposite each other in the radial direction of the hole 211, on the inner peripheral face of the hole 211. In the rotor main body 21, the number of projections may be not less than three.

In the present embodiment, the rotor main body 21 has a plurality of accommodation holes 212 provided in a pair. The accommodation holes 212 are arranged around the hole 211 in the circumferential direction of the rotor main body 21. The accommodation holes 212 axially penetrate through the rotor main body 21.

Each of the accommodation holes 212 accommodates therein a magnet 22. As will be described later, each magnet 22 is fixed in the corresponding accommodation hole 212 with a resin which the rotor manufacturing apparatus 1 supplies into the accommodation holes 212.

As illustrated in FIGS. 1 and 2, the first mold 3 includes a resin receive space portion 31, a flow path 32, and a contact portion 33.

The resin receive space portion 31 is a space receiving the resin to be supplied into an accommodation hole 212. The resin receive space portion 31 is located at the center of the first mold 3. A plunger 6 is disposed in the resin receive space portion 31, and is movable up and down in the resin receive space portion 31. A plunger drive mechanism (not illustrated) moves the plunger 6 upward and downward.

The flow path 32 is a flow path through which the molten resin flows into the accommodation holes 212. In the present embodiment, the first mold 3 includes a plurality of the flow paths 32 through which the resin is supplied into the accommodation holes 212. The flow paths 32 communicate at their upstream sides with the resin receive space portion 31. The flow paths 32 have, on their downstream sides, outlets 321 opened at a lower face of the first mold 3.

The contact portion 33 is inserted in the hole 211 in the rotor main body 21, and is in contact with the inner peripheral face of the hole 211. In the present embodiment, the first mold 3 includes four contact portions 33. Each of the contact portions 33 has a pin shape and protrudes downward from the lower face of the first mold 3. In the first mold 3, the number of contact portions may be not more than three or may be not less than five.

Preferably, the contact portions 33 are detachable from the first mold 3. In this case, for example, the contact portions 33 are attached to the lower face of the first mold 3 with screws.

The second mold 4 is configured to sandwich the rotor main body 21 in conjunction with the first mold 3. Therefore, the rotor main body 21 is mounted above an upper face of the second mold 4 with the plate 5 interposed between the rotor main body 21 and the second mold 4 as described above.

The plate 5 has a substantially quadrangular plate shape as seen in plan view. The plate 5 includes a first protrusion 51 protruding from its upper face in the thickness direction. In the present embodiment, the plate 5 includes two first protrusions 51. The first protrusions 51 protrude upward from the upper face of the plate 5. The rotor main body 21 includes a first insertion portion 214 in which a first protrusion 51 of the plate 5 is inserted. In the present embodiment, the plate 5 includes the plurality of first protrusions 51, and the rotor main body 21 includes a plurality of the first insertion portions 214 in accordance with the number of first protrusions 51. Each of the first insertion portions 214 is a hole opened at a lower face of the rotor main body 21. Each of the first insertion portions 214 has a substantially triangular shape as seen in bottom view. In the plate 5, the number of first protrusions 51 may be not less than three. In this case, the rotor main body 21 includes three or more first insertion portions 214.

The first mold 3 includes a second protrusion 34. In the present embodiment, the first mold 3 includes two second protrusions 34. The second protrusions 34 protrude downward from the lower face of the first mold 3.

The first mold 3 also includes a pillar portion 35 inserted in the hole 211 in the rotor main body 21. The pillar portion 35 has a pillar shape and protrudes downward from the lower face of the first mold 3. The rotor main body 21 includes a second insertion portion 215 in which a second protrusion 34 of the first mold 3 is inserted. In the present embodiment, the first mold 3 includes the plurality of second protrusions 34, and the rotor main body 21 includes a plurality of the second insertion portions 215 in accordance with the number of second protrusions 34. Each of the second insertion portions 215 is a hole opened at an upper face of the rotor main body 21. Each of the second insertion portions 215 has a substantially triangular shape as seen in plan view.

In the present embodiment, the first insertion portions 214 located below the rotor main body 21 communicate with the second insertion portions 215 located above the rotor main body 21. In other words, the rotor main body 21 has a plurality of through-holes forming the first insertion portions 214 and the second insertion portions 215. The first protrusions 51 of the plate 5 are inserted in axially first openings of the through-holes. The second protrusions 34 of the first mold 3 are inserted in axially second openings of the through-holes.

The first mold 3 includes a heater 36 as a heat source. The second mold 4 includes a heater 41 as a heat source. The heater 36 of the first mold 3 is located near the resin receive space portion 31 in the first mold 3. The heater 41 of the second mold 4 is located at an upper end in the second mold 4. The heater 36 heats the resin in the resin receive space portion 31. The heater 41 heats the rotor main body 21.

Next, a description will be given of an operation of the rotor manufacturing apparatus 1 according to the present embodiment. Before the rotor manufacturing apparatus 1 starts to operate, first, the plate 5 on which the rotor main body 21 is mounted is placed on the upper face of the second mold 4. At this time, the first protrusions 51 of the plate 5 are inserted into the first insertion portions 214 in the rotor main body 21. The rotor main body 21 is thus positioned with respect to the plate 5, that is, the second mold 4.

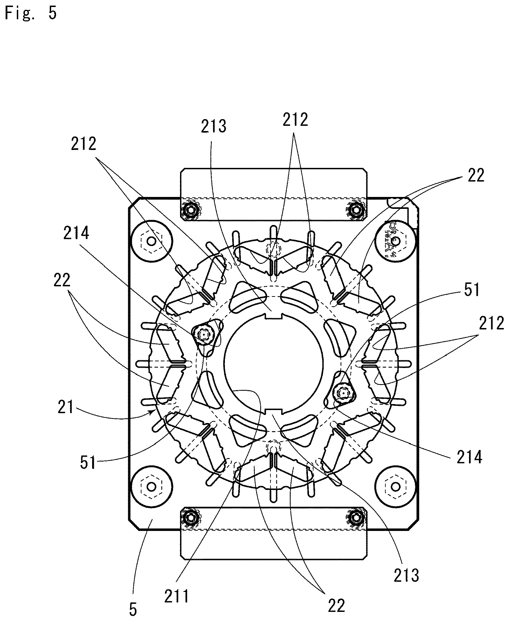

As illustrated in FIG. 5, the two first protrusions 51 are located opposite each other on the plate 5 in the radial direction of the rotor main body 21. This configuration therefore enables regulation of axial rotation to the rotor main body 21 mounted on the plate 5.

The rotor main body 21 is mounted above the second mold 4 as described above, and then the first mold drive mechanism (not illustrated) is driven to move the first mold 3 downward, so that the rotor main body 21 is sandwiched between the first mold 3 and the second mold 4. At this time, the contact portions 33 of the first mold 3 are inserted into the hole 211 in the rotor main body 21, and are brought into contact with the inner peripheral face of the hole 211.

The rotor main body 21 is thus positioned with respect to the first mold 3 and the second mold 4 with the rotor main body 21 sandwiched between the first mold 3 and the second mold 4. In addition, the rotor main body 21 is accurately positioned with respect to the first mold 3 since the contact portions 33 are positioned while being in contact with the inner peripheral face of the hole 211. As illustrated in FIG. 3, the four contact portions 33 of the first mold 3 are equidistantly arranged in the circumferential direction in the hole 211 in the rotor main body 21 in the state in which the four contact portions 33 are inserted in the hole 211. When the rotor main body 21 axially rotates relative to the first mold 3 in the state in which the four contact portions 33 of the first mold 3 are inserted in the hole 211 in the rotor main body 21, radially opposite two of the four contact portions 33 come into contact with the projections 213, respectively. This configuration thus enables regulation of axial rotation to the rotor main body 21.

In addition, when the rotor main body 21 is sandwiched between the first mold 3 and the second mold 4, the second protrusions 34 of the first mold 3 are inserted into the second insertion portions 215 of the rotor main body 21. The first protrusions 51 inserted into the first insertion portions 214 of the rotor main body 21 and the second protrusions 34 inserted into the second insertion portions 215 of the rotor main body 21 are located axially opposite each other in the state in which the rotor main body 21 is sandwiched between the first mold 3 and the second mold 4. Therefore, the first protrusions 51 and the second protrusions 34 overlap each other as seen from the axial direction of the rotor main body 21 in the state in which the rotor main body 21 is sandwiched between the first mold 3 and the second mold 4. This configuration thus enables accurate positioning of the rotor main body 21 relative to the first mold 3 and the second mold 4.

In addition, the pillar portion 35 of the first mold 3 is inserted in the hole 211 in the rotor main body 21. The pillar portion 35 has a distal end that passes through the hole 211 and is in contact with the upper face of the plate 5, in the state in which the rotor main body 21 is sandwiched between the first mold 3 and the second mold 4. The pillar portion 35 supports a portion of the first mold 3 with which the hole 211 in the rotor main body 21 is covered for the second mold 4. The upper face of the plate 5 with which the hole 211 is covered corresponds to a bottom face of the hole 211.

The hole 211 in the rotor main body 21 may be a hole having a bottom face rather than a through-hole. In this case, the distal end of the pillar portion 35 of the first mold 3 is in contact with the bottom face of the hole in the rotor main body in the state in which the rotor main body 21 is sandwiched between the first mold 3 and the second mold 4.

The outlets of the flow paths 32 of the first mold 3 are located to respectively overlap the accommodation holes 212 as seen from the axial direction of the rotor main body 21 in the state in which the rotor main body 21 is sandwiched between the first mold 3 and the second mold 4.

In supplying a resin into the accommodation holes 212 in the rotor main body 21, a solid resin material in the resin receive space portion 31 is molten by heat using the heater 36 of the first mold 3. When the plunger 6 is moved downward in the state in which the resin material is molten, the molten resin in the resin receive space portion 31 is flowed toward the flow paths 32. The molten resin is thus supplied into the accommodation holes 212 through the flow paths 32. The magnets 22 are accommodated in the accommodation holes 212 in advance.

In supplying the resin into the accommodation holes 212, the rotor main body 21 is heated in advance using the heater 41 of the second mold 4. The molten resin is thus flowed to lower ends in the accommodation holes 212 without being solidified at upper ends in the accommodation holes 212.

The molten resin is supplied into a clearance between each accommodation hole 212 and the magnet 22 accommodated therein. The resin in the accommodation holes 212 is solidified to fix the magnets 22 in the accommodation holes 212. The rotor manufacturing apparatus 1 thus manufactures a rotor.

A rotor manufacturing apparatus 1 according to the present embodiment is a rotor manufacturing apparatus for manufacturing a rotor including a rotor main body 21 having a hole 211 located at its center and an accommodation hole 212 accommodating a magnet 22, and the magnet 22 accommodated in the accommodation hole 212 and fixed in the accommodation hole 212 with a resin. The rotor manufacturing apparatus 1 includes: a first mold 3 including a resin receive space portion 31 receiving the resin to be supplied into the accommodation hole 212, a flow path 32 through which the molten resin flows into the accommodation hole 212, and a contact portion 33 inserted in the hole 211, the contact portion 33 being in contact with an inner peripheral face of the hole 211; and a second mold 4 configured to sandwich the rotor main body 21 in conjunction with the first mold 3.

In a case where a rotor main body is positioned with respect to a pair of molds in such a manner that the rotor main body is simply sandwiched between the molds, the rotor main body is positioned at a position where the rotor main body is sandwiched between the molds. The position of the rotor main body sandwiched between the molds depends on a position of the rotor main body first mounted on one of the molds. In this case, an outlet of a resin flow path is possibly misaligned with a magnet accommodation hole in the molds.

In order to avoid this misalignment, in the rotor manufacturing apparatus 1 according to the present embodiment, the contact portion 33 is in contact with the inner peripheral face of the through-hole 211 in the rotor main body 21 with the rotor main body 21 sandwiched between the first mold 3 and the second mold 4. The rotor main body 21 is thus easily positioned with respect to the first mold 3 and the second mold 4. Therefore, the rotor main body 21 sandwiched between the first mold 3 and the second mold 4 is positioned at the position where the contact portion 33 is in contact with the inner peripheral face of the through-hole 211. With this configuration, the flow path 32 communicates with the accommodation hole 212, so that the resin is reliably supplied into the accommodation hole 212 through the flow path 32.

In the rotor manufacturing apparatus 1 according to the present embodiment, the rotor main body 21 includes a projection 213 protruding radially inward from an inner peripheral face of the hole 211. The contact portion 33 is in contact with the projection 213 in the state in which the rotor main body 21 is sandwiched between the first mold 3 and the second mold 4.

With this configuration, the rotor main body 21 is positioned with respect to the first mold 3 and the second mold 4 while being regulated as to its axial rotation. In supplying the resin into the accommodation hole 212, therefore, the rotor main body 21 is accurately positioned with respect to the first mold 3.

In the rotor manufacturing apparatus 1 according to the present embodiment, the first mold 3 includes a plurality of the contact portions 33. With this configuration, in supplying the resin into the accommodation hole 212, the rotor main body 21 is accurately positioned with respect to the first mold 3 as compared with the case where the first mold 3 includes one contact portion 33.

The rotor manufacturing apparatus 1 according to the present embodiment further includes a plate 5 disposed on the second mold 4 with the rotor main body 21 mounted thereon. The plate 5 includes a first protrusion 51 protruding in a thickness direction. The rotor main body 21 includes a first insertion portion 214 in which the first protrusion 51 is inserted.

With this configuration, the first protrusion 51 is inserted in the first insertion portion 214 in the state in which the rotor main body 21 is mounted above the second mold 4. The rotor main body 21 is thus positioned with respect to the second mold 4. Therefore, the rotor main body 21 is easily positioned in such a manner that the rotor main body 21 is mounted above the second mold 4.

In the rotor manufacturing apparatus 1 according to the present embodiment, the contact portion 33 is detachable from the first mold 3. With this configuration, the first mold 3 is usable in supplying a resin into a hole in a rotor main body that is different in hole shape from the rotor main body.

In the rotor manufacturing apparatus 1 according to the present embodiment, the first mold 3 includes a pillar portion 35 inserted in the hole 211. The pillar portion 35 has a distal end that is in contact with a bottom of the hole 211 with the rotor main body 21 sandwiched between the first mold 3 and the second mold 4.

With this configuration, the pillar portion 35 supports a portion of the first mold 3 with which the hole 211 in the rotor main body 21 is covered. In supplying the resin into the accommodation hole 212, therefore, the portion of the first mold 3, with which the hole 211 in the rotor main body 21 is covered, is not bent toward the second mold 4.

In the rotor manufacturing apparatus 1 according to the present embodiment, the first mold 3 further includes a second protrusion 34. The rotor main body 21 includes a second insertion portion 215 in which the second protrusion 34 is inserted. The first protrusion 51 and the second protrusion 34 overlap each other as seen from the axial direction of the rotor main body 21 in the state in which the rotor main body 21 is sandwiched between the first mold 3 and the second mold 4.

With this configuration, the position of the rotor main body 21 positioned by the first protrusion 51 and the position of the rotor main body 21 positioned by the second protrusion 34 overlap each other as seen from the axial direction. In supplying the resin into the accommodation hole 212, therefore, the rotor main body 21 is accurately positioned.

In the rotor manufacturing apparatus 1 according to the present embodiment, the rotor main body 21 includes a plurality of the accommodation holes 212. The first mold 3 includes a plurality of the flow paths 32 through which the resin is supplied into the accommodation holes 212. The flow paths 32 communicate with the resin receive space portion 31 that is shared.

With this configuration, the resin receive space portion 31 of the first mold 3 is shared. Therefore, the configuration of the rotor manufacturing apparatus 1 is simplified as compared with a case where multiple resin receive space portions respectively communicate with the flow paths 32.

### (Other Embodiments)

The foregoing description concerns an embodiment of the present invention; however, the foregoing embodiment is merely an example for embodying the present invention. The present invention is not limited to the foregoing embodiment, and the foregoing embodiment may be appropriately modified within a range not departing from the scope of the present invention.

In the foregoing embodiment, the first mold 3 and the second mold 4 are arranged up and down. However, the present invention is not limited to this arrangement. Alternatively, the first mold 3 and the second mold 4 may be arranged left and right.

In the foregoing embodiment, each of the accommodation holes 212 is a through-hole. Alternatively, an accommodation hole may be opened at an outer peripheral face of a rotor main body. For example, each accommodation hole may have a groove shape and extend axially on the outer peripheral face of the rotor main body 21. In this case, the magnets may be exposed from the outer peripheral face of the rotor main body.

In the foregoing embodiment, each of the first insertion portions 214 is a hole. Alternatively, each first insertion portion may be a step located at an outer periphery of the rotor main body. Still alternatively, each first insertion portion may be a groove extending axially on the outer peripheral face of the rotor main body.

### Industrial Applicability

The present invention is applicable to a rotor manufacturing apparatus for manufacturing a rotor including a magnet fixed with a resin.

### Reference Signs List

- 1: rotor manufacturing apparatus
- 3: first mold
- 4: second mold
- 5: plate
- 21: rotor main body
- 22: magnet
- 211: hole
- 212: accommodation hole
- 213: projection
- 214: first insertion portion
- 215: second insertion portion
- 31: resin receive space portion
- 32: flow path
- 33: contact portion
- 34: second protrusion
- 35: pillar portion
- 51: first protrusion

## Claims

1. A rotor manufacturing apparatus (1) for manufacturing a rotor including a rotor main body (21) having a hole (211) located at its center and an accommodation hole (212) accommodating a magnet (22), and the magnet (22) accommodated in the accommodation hole (212) and fixed in the accommodation hole (212) with a resin,
the rotor manufacturing apparatus (1) comprising:
a first mold (3) including
a resin receive space portion (31) receiving the resin to be supplied into the accommodation hole (212),
a flow path (32) through which the molten resin flows into the accommodation hole (212), and
a contact portion (33) configured to be inserted into the hole (211),
the contact portion (33) being configured to be in contact with an inner peripheral face of the hole (211); and
a second mold (4) configured to sandwich the rotor main body (21) in conjunction with the first mold (3),
**characterized in that**
the contact portion (33) has a pin shape and protrudes from a face of the first mold (3) facing the second mold (4) towards the second mold (4).

2. The rotor manufacturing apparatus (1) according to claim 1, wherein
the first mold (3) includes a plurality of the contact portions (33).

3. The rotor manufacturing apparatus (1) according to any one of claims 1 or 2, further comprising:
a plate (5) disposed on the second mold (4),
wherein
the plate (5) includes a first protrusion (51) protruding in a thickness direction.

4. The rotor manufacturing apparatus (1) according to any one of claims 1 to 3, wherein
the contact portion (33) is detachable from the first mold (3) .

5. The rotor manufacturing apparatus (1) according to claim 3, wherein
the first mold (3) further includes a second protrusion (34), and
the first protrusion (51) and the second protrusion (34) are located to overlap each other as seen from an axial direction.

6. The rotor manufacturing apparatus (1) according to any one of claims 1 to 5, wherein
the first mold (3) includes a plurality of the flow paths (32) communicating with the resin receive space portion (31) that is shared.

## Patentansprüche

1. Rotorherstellungsvorrichtung (1) zum Herstellen eines Rotors, welcher aufweist:
einen Rotorhauptkörper (21), der ein an seinem Zentrum angeordnetes Loch (211) und
ein einen Magneten (22) aufnehmendes Aufnahmeloch (212) aufweist, und den Magneten (22), der in dem Aufnahmeloch (212) aufgenommen und mit einem Harz in dem Aufnahmeloch (212) befestigt ist,
wobei die Rotorherstellungsvorrichtung (1) aufweist:
eine erste Form (3), die aufweist:
einen Harzaufnahmeraumabschnitt (31), welcher das Harz aufnimmt, das in das Aufnahmeloch (212) zugeführt werden soll,
einen Strömungspfad (32), durch welchen das geschmolzene Harz in das Aufnahmeloch (212) fließt, und
einen Kontaktabschnitt (33), der dazu eingerichtet ist, in das Loch (211) eingeführt zu werden, wobei der Kontaktabschnitt (33) dazu eingerichtet ist, in Kontakt mit einer Innenumfangsfläche des Lochs (211) zu stehen; und
eine zweite Form (4), die dazu eingerichtet ist, den Rotorhauptkörper (21) zusammen mit der ersten Form (3) sandwichartig aufzunehmen,
**dadurch gekennzeichnet, dass**
der Kontaktabschnitt (33) eine Stiftform aufweist und von einer Fläche der ersten Form (3), die der zweiten Form (4) zugewandt ist, zu der zweiten Form (4) vorsteht.

2. Rotorherstellungsvorrichtung (1) nach Anspruch 1, wobei die erste Form (3) mehrere der Kontaktabschnitte (33) aufweist.

3. Rotorherstellungsvorrichtung (1) nach Anspruch 1 oder 2, die ferner aufweist:
eine Platte (5), die an der zweiten Form (4) angeordnet ist, wobei die Platte (5) einen ersten Vorsprung (51) aufweist, der in einer Dickenrichtung vorsteht.

4. Rotorherstellungsvorrichtung (1) nach einem der Ansprüche 1 bis 3, wobei der Kontaktabschnitt (33) von der ersten Form (3) abnehmbar ist.

5. Rotorherstellungsvorrichtung (1) nach Anspruch 3, wobei
die erste Form (3) ferner einen zweiten Vorsprung (34) aufweist und
der erste Vorsprung (51) und der zweite Vorsprung (34) derart angeordnet sind, dass sie sich bei Betrachtung aus einer axialen Richtung überlappen.

6. Rotorherstellungsvorrichtung (1) nach einem der Ansprüche 1 bis 5, wobei die erste Form (3) mehrere der Strömungspfade (32) aufweist, die mit dem gemeinsam genutzten Harzaufnahmeraumabschnitt (31) verbunden sind.

## Revendications

1. Appareil de fabrication de rotor (1) pour fabriquer un rotor comportant un corps principal de rotor (21) ayant un trou (211) situé en son centre et un trou de logement (212) logeant un aimant (22), et l'aimant (22) logé dans le trou de logement (212) et fixé dans le trou de logement (212) avec une résine,
l'appareil de fabrication de rotor (1), comprenant :
un premier moule (3) comportant
une partie d'espace de réception de résine (31) recevant la résine à alimenter dans le trou de logement (212),
un trajet d'écoulement (32) à travers lequel la résine fondue s'écoule dans le trou de logement (212), et
une partie de contact (33) configurée pour être insérée dans le trou (211),
la partie de contact (33) étant configurée pour être en contact avec une face périphérique intérieure du trou (211) ; et
un second moule (4) configuré pour enserrer le corps principal de rotor (21) en association avec le premier moule (3),
**caractérisé en ce que** la partie de contact (33) a une forme de broche et fait saillie à partir d'une face du premier moule (3) faisant face au second moule (4) vers le second moule (4).

2. Appareil de fabrication de rotor (1) selon la revendication 1, dans lequel le premier moule (3) comporte une pluralité des parties de contact (33).

3. Appareil de fabrication de rotor (1) selon l'une quelconque des revendications 1 ou 2, comprenant en outre :
une plaque (5) disposée sur le second moule (4),
dans lequel
la plaque (5) comporte une première saillie (51) faisant saillie dans une direction d'épaisseur.

4. Appareil de fabrication de rotor (1) selon l'une quelconque des revendications 1 à 3 ; dans lequel
la partie de contact (33) peut être détachée du premier moule (3).

5. Appareil de fabrication de rotor (1) selon la revendication 3, dans lequel
le premier moule (3) comporte en outre une seconde saillie (34), et
la première saillie (51) et la seconde saillie (34) sont situées de manière à se chevaucher l'une et l'autre lorsqu'elles sont observées à partir d'une direction axiale.

6. Appareil de fabrication de rotor (1) selon l'une quelconque des revendications 1 à 5 ; dans lequel
le premier moule (3) comporte une pluralité des trajets d'écoulement (32) communiquant avec la partie d'espace de réception de résine (31) qui est partagée.
